# EUROPÄISCHE PATENTSCHRIFT

(11) **EP 1 668 285 B1**
(45) Veröffentlichungstag und Bekanntmachung des Hinweises auf die Patenterteilung: **12.03.2008**
(21) Anmeldenummer: 04786895.5
(22) Anmeldetag: 29.09.2004
(51) Int. Cl.: F16L 25/14

(54) **REDUZIERSTÜCK UND VERFAHREN ZUM HERSTELLEN EINES REDUZIERSTÜCKES**
REDUCING ADAPTER AND METHOD FOR THE PRODUCTION THEREOF
RACCORD REDUCTEUR ET SON PROCEDE DE FABRICATION

(30) Priorität: 30.09.2003 DE 20315084 U
(43) Veröffentlichungstag der Anmeldung: 14.06.2006
(73) Patentinhaber: Zimmermann, Josef, 53894 Mechernich-Holzheim (DE)
(72) Erfinder: Zimmermann, Josef, 53894 Mechernich-Holzheim (DE)
(74) Vertreter: Castell, Klaus
(86) Internationale Anmeldenummer: PCT/DE2004/002183
(87) Internationale Veröffentlichungsnummer: WO 2005/033573

(56) Entgegenhaltungen:
- DE-A- 4 004 754
- DE-U- 20 219 220
- GB-A- 1 385 240
- NL-A- 8 101 127
- US-A- 3 148 895
- US-A- 4 685 705

## Beschreibung

Die Erfindung betrifft ein Reduzierstück mit den Merkmalen des Oberbegriffs des Patentanspruchs 1.

Reduzierstücke mit denen ein erster Rohrdurchmesser eines ersten Rohres auf einen zweiten Rohrdurchmesser eines zweiten Rohres reduziert werden kann, sind aus dem Stand der Technik hinlänglich bekannt.

Beispielsweise ist aus der Gebrauchsmusterschrift DE 79 25 558 U1 ein Reduzierstück für Rohrleitungen bekannt, bei welchem konische Teilstücke mit zylindrischen Teilstücken formschlüssig verbunden sind. Hierdurch ist ein Reduzierstück bereit gestellt, mit welchem wirksam eine Reduzierung von einem ersten Rohrdurchmesser auf einen zweiten Rohrdurchmesser erreicht wird. Jedoch baut dieses Reduzierstück sehr groß und wenig stabil, so dass zum einen erhebliche Stemmarbeiten zum Einfügen des Reduzierstückes in ein Mauerwerk notwendig sind und zum anderen die Gefahr von Leckagen an den Nahtstellen zwischen den einzelnen Teilstücken relativ groß ist.

Insbesondere um die Baugröße von Reduzierstücken zu verringern, ist aus der DE 88 07 430 U1 ein Reduzierstück bekannt, welches auf einem möglichst geringen Raum einen ersten Rohrdurchmesser auf einen zweiten kleineren Rohrdurchmesser reduziert.

Ein weiteres Reduzierstück ist aus der NL 8 101 127 A bekannt, das jedoch instabil und teuer in der Herstellung ist.

Es ist Aufgabe vorliegender Erfindung gattungsgemäße Reduzierstücke derart weiter zu entwickeln, dass sie zum einen robuster ausgebildet sind und dabei einfacher und kostengünstiger herzustellen sind.

Die Aufgabe vorliegender Erfindung wird von einem Reduzierstück mit den Merkmalen des Patentanspruchs 1 gelöst.

Dadurch dass die Verbindungsmittel sowohl von einem Ende des ersten Aufnahmebereiches als auch von einem Ende des zweiten Aufnahmebereiches beabstandet an dem Reduzierstück angeordnet sind, sind die beiden Aufnahmebereiche zum einen sehr flexibel und zum anderen trotzdem hinreichend stabil ausgelegt.

Vorliegend bezeichnet der Begriff "Reduzierstück" jegliche Einrichtung, mit welcher zwei im Durchmesser unterschiedlich dimensionierte Bauteile miteinander verbunden werden können.

Mit dem Begriff "Verbindungsmittel" sind im Sinne der Erfindung jegliche Bauteile gemeint, mit welchen der erste Aufnahmebereich und der zweite Außahmebereich im Sinne der Erfindung miteinander befestigt werden können.

Der Begriff "Aufnahmebereich" beschreibt vorliegend jegliche Einrichtung, in welches entweder ein Bauteil, wie beispielsweise ein Rohr, eingeschoben oder welches selbst in ein Bauteil, wie beispielsweise ein Rohr, derart eingeschoben werden kann, dass ein Durchmesser eines ersten Rohres auf einen Durchmesser eines zweiten Rohres reduziert werden kann. Es versteht sich, dass die Aufnahmebereiche verschiedenartigst ausgebildet sein können. Um jedoch die meisten Einsatzbereiche abdecken zu können, sind die Aufnahmebereiche zumindest bereichsweise ein Form eines Zylinders ausgebildet.

Mit dem Ausdruck "Ende" wird vorliegend z.B. eine Begrenzung eines Aufnahmebereiches an derjenigen Seite des Aumahmebereiches beschrieben, an welcher ein Rohr in das Reduzierstück eingesteckt wird.

Mit dem Begriff "diagonal" ist im Sinne der Erfindung eine Ausrichtung gemeint, bei welcher ein Verbindungsmittel nicht lotrecht zwischen dem ersten Aufnahmebereich und dem weiteren Aufnahmebereich verläuft sondern beispielsweise in einem Bogen oder gestuft.

Eine bevorzugte Ausführungsvariante sieht vor, dass die Verbindungsmittel einen konusförmigen Körper aufweisen. Mittels des konusförmigen Körpers kann das Reduzierstück in einem Raum zwischen dem ersten Aufnahmebereich und dem weiteren Aufnahmebereich abgedichtet werden.

Durch die diagonal angeordneten Verbindungsmittel bzw. durch den konusförmigen Körper zwischen dem ersten Aufnahmebereich und dem weiteren Aufnahmebereich ist ein derart besonders stabiles Reduzierstück geschaffen, bei weichem der erste Aufnahmebereich und der weitere Aufnahmebereich besonders fest und langlebig miteinander verbunden sind. Und dennoch ist das Reduzierstück ausreichend flexibel, um es leichtgängig und damit arbeitserleichternd in einem Rohr zu befestigen.

In diesem Zusammenhang ist vorgesehen, dass die Verbindungsmittel beabstandet von einem Ende des ersten Aufnahmebereichs an dem ersten Aufnahmebereich und beabstandet von einem Ende des weiteren Aufnahmebereiches an dem weiteren Aufnahmebereich angeordnet sind und in etwa von dem Ende des ersten Aufnahmebereiches zu dem diesem Ende gegenüberliegenden Ende des weiteren Aufnahmebereichs verlaufen.

Um zu verhindern, dass zwei miteinander zu verbindende Rohre ungewollt zu weit in die Aufnahmebereiche oder die Aufnahmebereiche ungewollt zu weit in die zu verbindenden Rohre eindringen, ist es vorgesehen, dass die Aufnahmebereiche zumindest an einem ihrer Enden einen Kragen aufweisen. Je nachdem an welchem Rohrdurchmesser ein Aufnahmebereich angeordnet wird, ist der Kragen nach innen, also zum Aufnahmebereichinneren, oder nach außen, also zum Aufnahmebereichäußeren, gewölbt an einem Ende eines Aufnahmebereiches ausgebildet.

Damit auch zueinander versetzte Rohre miteinander verbunden werden können, ist es vorteilhaft, wenn der zweite Aufnahmebereich konzentrisch oder exzentrisch innerhalb des ersten Aufnahmebereichs angeordnet ist.

Die Erfindung sieht vor, dass der erste Aufnahmebereich und der weitere Aufnahmebereich an Kontaktstellen zu den Verbindungsmitteln Nuten für Dichtungen aufweisen. Die Aufnahmebereiche sind an den Kontaktstellen zu den Verbindungsmitteln vorteilhafter Weise besonders widerstandsfähig, so dass die Aufnahmebereiche dort kaum oder gar nicht ihre vorgegebene Gestalt verändern und somit dort angeordnete Dichtungen besonders sicher dichten.

Um die Nuten für die Dichtungen an den Aufnahmebereichen vorsehen zu können, ist es vorteilhaft, wenn der erste Aufnahmebereich und der weitere Aufnahmebereich an den Kontaktstellen verstärkte Seitenwände aufweisen.

Das Reduzierstück ist gegenüber einem zu reduzierenden Rohr besonders gut abgedichtet, da der erste Aufnahmebereich an einer Rohrmantelfläche eine Nut zur Aufnahme einer Dichtung aufweist.

Dementsprechend ist es vorgesehen, dass der zweite Aufnahmebereich an einer Rohrinnenseite ebenfalls eine Nut zur Aufnahme einer Dichtung aufweist. Hierdurch ist das Verbindungsmittel gegenüber einem Rohr besonders gut abgedichtet, auf dessen kleineren Durchmesser ein größerer Durchmesser eines anderen Rohres reduziert werden soll.

Das vorliegende Reduzierstück ist besonders kostengünstig hergestellt, da das Reduzierstück ein Spritzgussbauteil, aus Kunststoff, ist.

Weitere Vorteile, Ziele und Eigenschaften vorliegender Erfindung werden anhand nachfolgender Erläuterung anliegender Zeichnung beschrieben, in welcher beispielhaft Reduzierstücke dargestellt sind.

Es zeigt
- Figur 1: ein erstes Reduzierstück und
- Figur 2: ein zu dem Reduzierstück aus der Figur 1 alternatives Reduzierstück.

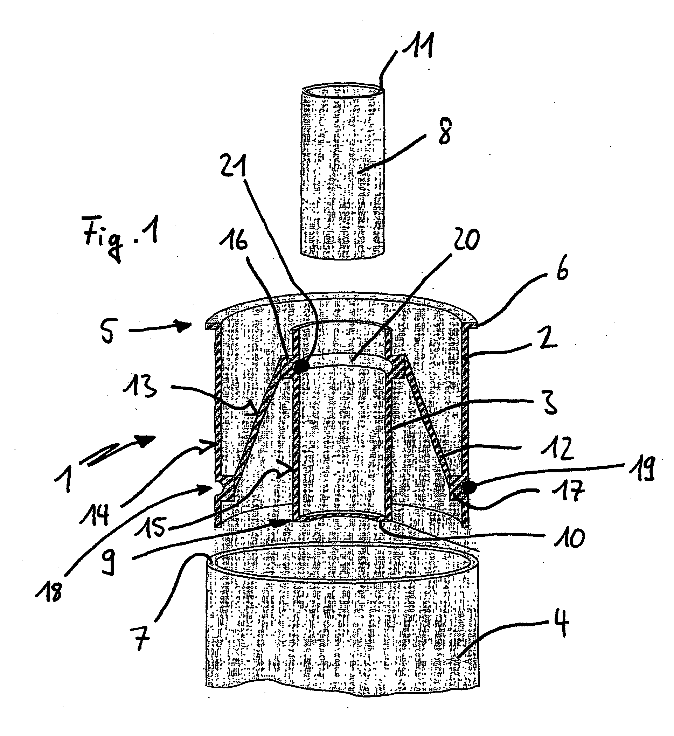

Das in der Figur 1 gezeigte Reduzierstück 1 weist einen ersten Aufnahmebereich 2 und einen zweiten Aufnahmebereich 3 auf. Der erste Aufnahmebereich 2 ist hierbei der äußere Aufnahmebereich, mit welchem das Reduzierstück 1 in ein erstes Rohr 4 eingesteckt und dort befestigt wird. Damit der erste Aufnahmebereich 2 nicht vollständig in das Rohr 4 hineingleitet, weist der erste Aufnahmebereich 2 an seinem ersten Ende 5 einen nach außen ragenden Kragen 6 auf, der an die Wandung 7 des Rohres 4 anschlägt.

Der zweite Aufnahmebereich 3 ist konzentrisch innerhalb des ersten Aufnahmebereiches 2 angeordnet und dient dazu, ein zweites Rohr 8 aufzunehmen. Damit das zweite Rohr 8 nicht über den zweiten Aufnahmebereich 3 hinausgleitet, weist der zweite Aufnahmebereich an seinem zweiten Ende 9 einen nach innen ragenden Kragen 10 auf, an welchem die Wandung 11 des zweiten Rohres 8 anstößt.

Damit der erste Aufnahmebereich 2 und der zweite Aufnahmebereich 3 besonders fest miteinander verbunden sind, sind die beiden Aufnahmebereiche 2 und 3 mittels eines konusförmigen Verbindungsmittels 12 verbunden. Die Wandung 13 des konusförmigen Verbindungsmittels 12 verläuft hierbei schräg zu den Wandungen 14 des ersten Aufnahmebereiches und 15 des zweiten Aufnahmebereiches 3.

Mittels des kontisförmigen Verbindungsmittels 12 sind die beiden Aufnahmebereiche 2 und 3 besonders fest und stabil miteinander verbunden. Um diese Festigkeit auch insbesondere an einer Kontaktstelle 16, an welcher das konusförmige Verbindungsmittel 12 an dem zweiten Aufnahmebereich 3 befestigt ist, und einer Kontaktstelle 17, an welcher das konusförmige Verbindungsmittel 12 mit dem ersten Aufnahmebereich 2 verbunden ist, zu gewährleisten, ist sowohl der erste Aufnahmebereich 2 an der Kontaktstelle 17 als auch der zweite Aufnahmebereich 3 an der Kontaktstelle 16 verdickt.

Damit das Reduzierstück 1 gegenüber dem ersten Rohr 4 zuverlässig dicht verschlossen ist, weist der erste Aufnahmebereich 2 eine umlaufende Nut 18 auf, in welche eine Dichtung 19 eingelegt ist.

Um das Reduzierstück 1 auch gegenüber dem zweiten Rohr 8 abzudichten, weist der zweite Aufnahmebereich 3 an seiner Innenseite eine umlaufende Nut 20 auf, in der eine Dichtung 21 angeordnet ist.

Die Dichtungen 19 bzw. 21 sind vorteilhaft im Bereich der Kontaktstellen 16 bzw. 17 vorgesehen, da an diesen Kontaktstellen 16 bzw. 17 der erste Aufnahmebereich 2 bzw. der zweite Aufnahmebereich 3 verstärkt sind, so dass die Aufnahmebereiche 2 und 3 an den Kontaktstellen 16 bzw. 17 besonders stabil sind.

Alternativ oder kumulativ zu den Dichtungen 19 bzw. 21 können die Rohre 4 bzw. 8 gegenüber dem Reduzierstück 1 durch Kleben abgedichtet werden.

Um eine Schmutz- oder Wasseransammlung innerhalb des Reduzierstückes 1 unterhalb des konusförmigen Verbindungsmittels 12 zu vermeiden, verläuft das konusförmige Verbindungsmittel 12 von der unteren Innenseite des äußeren Aufhahmebereiches 3 zur oberen Außenseite des inneren Aufnahmebereiches 2. Durch den diagonalen Verlauf des konusförmigen Verbindungsmittels 12 wird ein Verbiegen der vorhandenen Aufnahmebereiche 2 und 3 praktisch ausgeschlossen.

Vorteilhafter Weise kann das vorliegende Reduzierstück 1 nahezu an jeder abgesägten Stelle eines beliebigen Rohres auch ohne Muffe bzw. ohne einen Überstand beispielsweise über eine Betondecke zur Reduzierung eines Rohrdurchmessers angebracht werden.

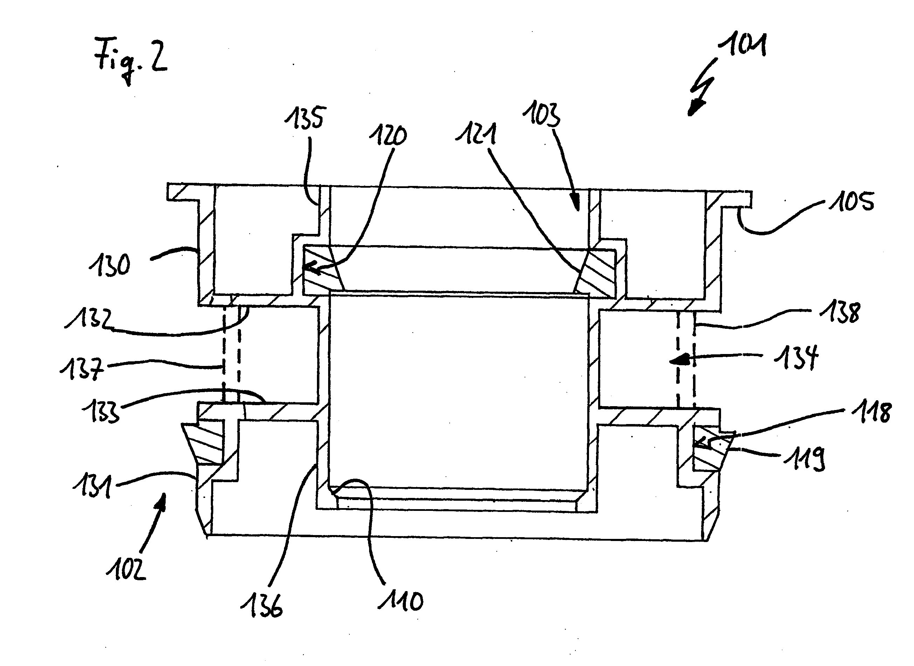

Das in der Figur 2 gezeigte Reduzierstück 101 weist einen ersten Aufnahmebereich 102 für ein erstes Rohr (hier nicht dargestellt) und einen zweiten Aufnahmebereich 103 für ein zweites Rohr (hier nicht dargestellt) auf. Der erste Aufnahmebereich 102 besteht aus einem oberen Haltebereich 130 und einem unteren Haltebereich 131. Der obere Haltebereich 130 des ersten Aufhahmebereiches 102 ist durch einen oberen Verbindungssteg 132 mit dem zweiten Aufnahmebereich 103 verbunden. Der untere Haltebereich 131 ist dagegen mit einem unteren Verbindungssteg 133 mit dem zweiten Aufnahmebereich 103 verbunden. Zwischen dem oberen Verbindungssteg 132 und dem unteren Verbindungssteg 133 ist das Reduzierstück 101 in einem Zwischenbereich 134 lediglich einwandig ausgebildet, wohingegen das Reduzierstück 101 am oberen Haltebereich 130 und am unteren Haltebereich 131 doppelwandig ausgebildet ist. Die Doppelwandigkeit in den Bereichen 130 und 131 wird durch die Teilstücke 135 und 136 des zweiten Aufnahmebereiches 103 gebildet.

Durch die gewählte Konstruktion ist das Reduzierstück 101 sehr flexibel und dennoch ausreichend stabil gestaltet. Somit kann das Reduzierstück 101 vorteilhaft in ein erstes Rohr eingesteckt werden, weil sich der untere Haltebereich 131 beim Anbringen in ein Rohr unabhängig von dem oberen Haltebereich 130 bewegen und den Gegebenheiten des Rohres anpassen kann. Hierdurch wird ein Einsetzen des Reduzierstückes 101 in ein Rohr wesentlich erleichtert. Um das Reduzierstück 101 gegenüber diesem Rohr abzudichten, weist der untere Haltebereich 131 eine Nut 118 auf, in der ein Dichtring 119 vorgesehen ist. Damit das Reduzierstück 101 unbeabsichtigt nicht vollständig in das Rohr hineingleitet, weist das Reduzierstück 101 am oberen Haltebereich 130 einen nach außen gewölbten Kragen 105 auf, der ein vollständiges Eingleiten des Reduzierstückes 101 in das Rohr verhindert.

Der zweite Aufnahmebereich 103 weist eine Nut 120 auf, in der eine Dichtung 121 angeordnet ist. Mittels der Dichtung 121 wird ein Rohr abgedichtet, welches in den zweiten Aufnahmebereich 103 eingeschoben wird. Damit dieses Rohr nicht über den Aufnahmebereich 103 hinaus gleitet, weist der zweite Aufnahmebereich 103 einen nach innen gewölbten Kragen 110 auf.

In einer alternativen Ausführungsvariante ist es möglich, in dem Zwischenbereich 134 einzelne Stützstege 137 und 138 (in diesem Ausführungsbeispiel nur gestrichelt angedeutet) vorzusehen. Mittels der Stützstege 137, 138 erhält das Reduzierstück 101 eine noch steifere Gestalt. Alternativ zu den einzelnen Stützstegen 137, 138 könnte in dem Zwischenbereich 134 auch ein umlaufender Verstärkungsring vorgesehen sein.

## Patentansprüche

1. Reduzierstück mit einem ersten Aufnahmebereich (2, 102) in Form eines äußeren Zylinders zum Aufnehmen eines ersten Rohres mit einem ersten Rohrdurchmesser und mit einem weiteren Aufnahmebereich (3, 103) in Form eines inneren Zylinders zum Aufnehmen eines weiteren Rohres mit einem von dem ersten Rohrdurchmesser verschiedenen weiteren Rohrdurchmesser, wobei der erste und der weitere Aufnahmebereich mit Verbindungsmitteln (12, 132, 133) miteinander verbunden sind, wobei die Verbindungsmittel (12, 132, 133)_sowohl beabstandet von einem Ende (5) des ersten Aufnahmebereiches (2, 102) als auch beabstandet von einem Ende (9) des weiteren Aufnahmebereiches (3, 103) die zylindrischen Aufnahmebereiche miteinander verbinden und der weitere Aufnahmebereich (3, 103) an seinem Ende (9) einen nach Innen weisenden Kragen (10, 110) aufweist ***dadurch gekennzeichnet, dass*** das Reduzierstück (1, 101) ein Spritzgussbauteil aus Kunststoff ist, wobei in dem Spritzgussbauteil am ersten Aufnahmebereich (2, 102) und am weiteren Aufnahmebereich (3, 103) an den Kontaktstellen (16, 17) der zylindrischen Aufnahmebereiche zu den Verbindungsmitteln (12, 132, 133) beabstandet zu den beiden Enden der jeweiligen Zylinder Nuten (18, 118, 120) zur Aufnahme einer Dichtung (19, 21,119,121) vorgesehen sind, und der erste Aufnahmebereich (2, 102) an seinem Ende (5) einen nach Außen weisenden Kragen (6, 105) aufweist, damit der erste Aufnahmebereich (2, 102) nicht vollständig in das erste Rohr hinein gleitet.

2. Reduzierstück nach Anspruch 1, **dadurch gekennzeichnet, dass** die Verbindungsmittel (12) einen konusförmigen Körper aufweisen.

3. Reduzierstück nach einem der Ansprüche 1 bis 2, **dadurch gekennzeichnet, dass** die Verbindungsmittel (12) beabstandet von einem ersten Ende (5) des ersten Aufnahmebereiches (2) zu einem dem ersten Ende gegenüberliegenden zweiten Ende (9) des zweiten Aufnahmebereiches (3) verlaufen.

4. Reduzierstück nach einem der Ansprüche 1 bis 3, **dadurch gekennzeichnet, dass** der zweite Aufnahmebereich (3) konzentrisch oder exzentrisch innerhalb des ersten Aufnahmebereiches (2) angeordnet ist.

## Claims

1. A reducer with a first receiving area (2, 102) in the shape of an outer cylinder for receiving a first pipe with a first pipe diameter and with another receiving area (3, 103) in the shape of an inner cylinder for receiving another pipe with another pipe diameter different from the first pipe diameter, the first and the other receiving area being connected to each other via connection means (12, 132, 133), the connection means (12, 132, 133) being placed at a distance from an end (5) of the first receiving area (2, 102) as wall as at a distance from an end (9) of the other receiving area (3, 103) and connecting the cylindrical receiving areas to each other and the other receiving area (3, 103) having a flange (10, 110) pointing inward, ***characterized in that*** the reducer (1, 101) is a die cast member made of plastic, grooves (18, 118, 120) for receiving a seal (19, 21, 119, 121) being provided in the die cast member on the first receiving area (2, 102) and on the other receiving area (3, 103) on the contact point between the cylindrical receiving areas and the connection means (12, 132, 133) at a distance from both ends of the respective cylinders, and that the first receiving area (2, 102) has a flange (6, 105) pointing outward on its end (5), in order to prevent the first receiving area (2, 102) from gliding completely into the first pipe.

2. The reducer according to claim 1, ***characterized in that*** the connection means (12) have a conical body.

3. The reducer according to one of the claims 1 to 2, ***characterized in that*** the connection means run at a distance from a first end (5) of the first receiving area (2) to a second end (9) of a second receiving area (3) opposing the first end.

4. The reducer according to one of the claims 1 to 3, ***characterized in that*** the second receiving area (3) is disposed concentrically or off centre inside the first receiving area (2).

## Revendications

1. Raccord réducteur avec une zone de réception (2, 102) en forme de cylindre extérieur pour recevoir un premier tuyau avec un premier diamètre de tuyau et avec une autre zone de réception (3, 103) en forme de cylindre intérieur pour recevoir un autre tuyau ayant un autre diamètre de tuyau différent du premier diamètre de tuyau, la première et l'autre zone de réception étant connectées entre elles par des moyens de connexion (12, 132, 133), les moyens de connexion (12, 132, 133) étant disposés à distance d'une extrémité (5) de la première zone de réception (2, 102) ainsi qu'à distance d'une extrémité (9) de l'autre zone de réception (3, 103) et reliant entre elles les zones de réception cylindriques et l'autre zone de réception comprenant à son extrémité (9) une bride (10, 110) orientée vers l'intérieur, ***caractérisé en ce que*** le raccord réducteur (1, 101) est un élément moulé par injection en plastique, des rainures (18, 118, 120) pour recevoir un joint (19, 21, 119, 121) étant disposées dans l'élément moulé par injection sur la première zone de réception (2, 102) et sur l'autre zone de réception (3, 103) aux points de contact (16, 17) entre les zones de réception cylindriques et les moyens de connexion à distance des deux extrémités des cylindres respectifs, et que la première zone de réception (2, 102) comporte à son extrémité (5) une bride (6, 105) orientée vers l'extérieur afin que la première zone de réception (2, 102) ne glisse pas entièrement dans le premier tuyau.

2. Raccord réducteur selon la revendication 1, ***caractérisé en ce que*** les moyens de connexion (12) comportent un corps conique.

3. Raccord réducteur selon l'une quelconque des revendications 1 à 2, ***caractérisé en ce que*** les moyens de connexion (12) s'étendent d'une première extrémité (5) de la première zone de réception (2) à une deuxième extrémité (9) de la deuxième zone de réception (3) située en regard de la première extrémité.

4. Raccord réducteur selon l'une quelconque des revendications 1 à 3, ***caractérisé en ce que*** la deuxième zone de réception (3) est disposée de manière concentrique ou excentrique à l'intérieur de la première zone de réception (2).
